# EUROPEAN PATENT APPLICATION

(11) **EP 4 730 284 A1**
(43) Date of publication of application: **22.04.2026**
(21) Application number: 24315473.9
(22) Date of filing: 15.10.2024
(51) Int. Cl.: G06V 40/16, G06F 21/32, G06V 40/18, G06V 40/40

(54) **IMPROVED LIVENESS DETECTION**

(71) Applicant: Amadeus S.A.S., 06410 Biot (FR)
(72) Inventor: Abraham, Eldho, 06410 Biot (FR); Landgrebe, Thomas, Sydney, NSW 2019 (AU); Merritt, Joshua, Sydney, NSW 2019 (AU); Horsley, Peter, Sydney, NSW 2019 (AU); Crumpton, Benjamin, Sydney, NSW 2019 (AU)
(74) Representative: Samson & Partner Patentanwälte mbB

(57) **Abstract**

Aliveness detection method for determining whether a presented face in respect of a user is a real face, comprising: obtaining an image sequence comprising a plurality of images. Each image comprises left eye image data and right eye image data. Each image in the image sequence being acquired of the presented face under a respective flash setting from a flash setting sequence, the flash settings in the flash setting sequence including at least two different flash setting values. The method further comprises processing the image sequence to detect speckles in the right eye image data and the left eye image data from the image sequence, which are caused by the eyes reflecting a flash applied under a flash setting when acquiring least one image in the sequence, the flash setting for the at least one image being brighter than the flash setting for a preceding and/or a succeeding image. The processing comprises applying a filter to enhance speckle image data corresponding to the speckles in the image sequence relative to non-speckle image data in the image sequence, and/or to suppress the non-speckle image data relative to the speckle image data. If one left eye speckle and one right eye speckle are detected respectively from the left eye image data and the right eye image data in the image sequence, determining whether the detected left and right eye speckles match each other. The method comprises outputting a liveness detection result based at least partially on the determination.

## Description

### TECHNICAL FIELD

This disclosure relates to automated facial authentication or identification systems, in particular to address potential vulnerabilities of these systems to spoofing attacks.

### BACKGROUND ART

The use of biometrics in the authentication or identification of individuals is gaining traction in recent years, in particular given the advance in facial recognition and image processing techniques. An application for which such use can be readily adopted is the identification or registration of passengers, particularly in airports, where there are already self-serve kiosks where passengers can complete other functions such as checking into flights, printing boarding passes, or printing baggage tags. With the advance of computing and camera technologies, facial biometrics verification also increasingly may be used in other scenarios, such as building access control.

In a facial biometric identification system, an image of a person's face is captured, analysed and compared with a database of registered faces to determine whether there is a match. Based on the result of this determination the system ascertains the identity of the person. This process is potentially vulnerable to "spoofing" attempts by an imposter to disguise their true identity, by presenting a "spoof', i.e., the facial image of someone else, to the biometric identification system. The system needs to be able to determine whether it has captured an image of a live face, or an image of a "spoof'.

Current solutions to detect such "spoofing" - i.e., making an estimate that the image is of a spoof, rely on analysing colour images taken with cameras. However, this approach is limited in its ability to defeat spoofing attempts using videos. Further adding to the issue is the availability of image manipulation software which can be used to animate pictures. For instance, there are mobile applications which can be downloaded to synthesize blinking. An imposter can present a display of a mobile device showing a facial picture of a different person to the biometric identification system, while using such software to animate the picture to make it appear like the person is interacting with the biometric identification system. This makes it more difficult for facial biometric identification systems to detect an imposter attempt by requesting a live interaction with the person it is trying to identify.

The determination of whether a real human is present is particularly challenging, during biometric enrolment process or any other Know Your Customer (KYC) standards related applications, when the enrolment is done in a non-restricted environment, e.g., using a mobile phone at a user location.

It is to be understood that, if any prior art is referred to herein, such reference does not constitute an admission that the prior art forms a part of the common general knowledge in the art in other country.

### SUMMARY

In a first aspect, there is disclosed a liveness detection method for determining whether a presented face in respect of a user is a real face, comprising: obtaining an image sequence comprising a plurality of images. Each image comprises left eye image data and right eye image data. Each image in the image sequence being acquired of the presented face under a respective flash setting from a flash setting sequence, the flash settings in the flash setting sequence including at least two different flash setting values. The method further comprises processing the image sequence to detect speckles in the right eye image data and the left eye image data from the image sequence, which are caused by the eyes reflecting a flash applied under a flash setting when acquiring least one image in the sequence, the flash setting for the at least one image being brighter than the flash setting for a preceding and/or a succeeding image. The method further comprises determining whether a left eye speckle is detected from the left eye image data can be matched to a right eye speckle detected from the right eye image data, or vice versa. The method comprises outputting a liveness detection result based at least partially on the determination.

In some embodiments, the processing comprises applying a filter to enhance speckle image data corresponding to the speckles in the image sequence relative to non-speckle image data in the image sequence, and/or to suppress the non-speckle image data relative to the speckle image data.

In some embodiments, detecting the speckles comprises applying a temporal algorithm to enhance a difference between the at least one image and the preceding and/or succeeding image, wherein an output image of the temporal algorithm is processed to identify image portions therein which are speckles.

In some embodiments, the identified speckles are required to have a minimum brightness level.

In some embodiments, the filter to enhance speckle image data relative to the non-speckle image data and/or to suppress the non-speckle image data relative to the speckle image data comprises a brightness filter applied to the output image from the temporal algorithm or a part thereof, to apply a brightness threshold.

The brightness threshold may be selected so that there is only one speckle for each eye.

In some embodiments, the detection of speckles comprises applying a location analysis, wherein the detected speckles are required to be located within the user's corneas in the image sequence.

In some embodiments, the flash or flashes applied in accordance with the flash sequence has or have a predetermined shape and/or dimension, or a configurable shape and/or dimension.

The flash or flashes applied in accordance with the flash sequence may have one or more flash portions.

In some embodiments, the detection of speckles comprises applying a geometry analysis, wherein the detected speckles are required to satisfy one or more geometrical constraints, the geometrical constraints comprising constraints based on one or more of shape, aspect ratio, and contour.

In some embodiments, determining whether the left speckle and the right speckle match with each other comprises determining whether a location of the left speckle and a location of the right speckle mirror each other.

Determining whether the left speckle and the right speckle match with each other may further comprise determining whether the left and right speckles have matching geometries.

In some embodiments, the method further comprises, if it is determined that the left and right eye speckles are detected from the image sequence and the detected left and right eye speckles match each other, calculating a confidence measure associated with the determination.

In some embodiments, calculating the confidence measure comprises: iterating the processing of the image sequence to detect the speckles one or more times, wherein at each iteration a threshold applied in the filter is increased; stopping the iterations when it is no longer possible to detect one left eye speckle in the left eye image data and one right eye speckle in the right eye image data; and determining the confidence measure based on the threshold applied during the last iteration of the processing of the image sequence to detect the speckles where it was possible to detect one left eye speckle in the left eye image data and one right eye speckle in the right eye image data.

In another aspect, there is disclosed herein an apparatus configured to determine whether a presented face in respect of a user is a real face, comprising a processor configured to execute machine instructions which implement the method mentioned above.

In another aspect, there is disclosed herein a method of biometrically determining a subject's identity, including: determining whether a presented face of the subject is a real face, in accordance with the method mentioned in the above; providing a two-dimensional image acquired of the presented face for biometric identification of the subject, if it is determined that the presented face is a real face; and outputting a result of the biometric identification.

In a further aspect, there is provided computer readable medium having stored thereon machine readable instructions, which when executed are adapted to perform any of the method mentioned in the above.

These and other aspects and embodiments of the present disclosure will be apparent to those of ordinary skill in the art in view of the detailed description of various embodiments and/or implementations, which is made with reference to the drawings, a brief description of which is provided next.

### BRIEF DESCRIPTION OF THE DRAWINGS

Embodiments will now be described by way of example only, with reference to the accompanying drawings in which
**Figure 1** is a high-level flow chart depicting a liveness detection method in accordance with an embodiment of the present invention.
**Figure 2** is a flow chart depicting the processing applied to a series of images to determine whether the image data from the series of images show the eyes of a real person, in accordance with an embodiment of the present invention.
**Figure 3-1** conceptually depicts processing operations performed on the input images for identifying possible speckles, in accordance with an embodiment of the present invention.
**Figure 3-2** is an image depicting an output from the temporal edge filter shown in **Figure 3-1****.**
**Figure 3-3** is an image depicting the result of applying a flash filter to the image shown in **Figure 3-2****.**
**Figure 4-1** depicts a liveness detection process utilising the temporal flash filter, in accordance with an embodiment of the present invention.
**Figure 4-2** depicts a liveness detection process utilising the temporal flash filter, in accordance with another embodiment of the present invention.
**Figure 5** depicts an example program flow implementing a liveness detection process in accordance with an embodiment of the present invention, showing calls made to the flash processing module during the detection and refinement phases of the process.
**Figure 6** schematically depicts an example of a system for authenticating a traveller or registering a traveller, in accordance with an embodiment of the invention.
**Figures 7-1** and **7-2** are input images with possible speckles and facial landmarks around the eyes shown on the input image.
**Figures 7-3** and **7-4** show output images from the temporal processing applied to image sequences respectively including the image from **Figure 7-1** and **Figure 7-2**.

### DETAILED DESCRIPTION

In the following detailed description, reference is made to accompanying drawings which form a part of the detailed description. The illustrative embodiments described in the detailed description, depicted in the drawings, are not intended to be limiting. Other embodiments may be utilised and other changes may be made without departing from the spirit or scope of the subject matter presented. It will be readily understood that the aspects of the present disclosure, as generally described herein and illustrated in the drawings can be arranged, substituted, combined, separated and designed in a wide variety of different configurations, all of which are contemplated in this disclosure.

Disclosed is a method and system for detecting spoofing attempts or attacks. In a spoofing attempt, a facial image or model, rather than a live face, is presented to an automated system which uses facial biometrics for purposes such as the enrolment, registration or the verification of identities, to try to fool the automated system.

The "spoof" which is presented to the automated system in a spoofing attempt may be a static two-dimensional (2D) spoof such as a print-out or cut-out of a picture, or a dynamic 2D spoof such as a video of a face presented on a screen. The spoof may be a static three-dimensional (3D) spoof such as a static 3D model or a 3D rendering. Another type of spoofs are dynamic 3D spoofs, for example a 3D model with face expression dynamics in real or a virtual camera.

Embodiments of the present invention may be used as a stand-alone method, i.e., not combined with other methods for detecting real human presence. Alternatively, they may be used in conjunction with other methods. This may help to improve the robustness of the overall algorithm in more situations. For example, Applicant's application PCT/AU2024/050111 filed on 16 February 2024 and published as WO2024168396 on 22 August 2024, describes methods for spoof detection. The entirety of the content of the aforementioned application is hereby incorporated by reference.

Aspects of the disclosure will be described herein, with examples in the context of anti-spoofing for the biometric identification of persons such as air-transit passengers or other travellers. However, the technology disclosed is applicable to any other automated systems utilising facial biometrics.

In the context of air travel, the capture and biometric analysis of a passenger's face can occur at the various points, such as at flight check-in, baggage drop, security, boarding, etc. For example, in a typical identification system utilising facial biometric matching, the identification system includes image analysis algorithms, which rely on colour images taken with cameras. Systems using these algorithms are therefore limited in their ability to detect when a pre-recorded or a synthesized image sequence (i.e., video sequence) is being shown to the camera of the biometric identification system, rather than the real face of a person. The challenges are even greater when a 3D spoof is presented.

Thus, anti-spoofing for such systems may be done by configuring them to, or combining them with a system configured to, estimate whether the image being analysed is likely to have been taken of a spoof or a real face, i.e., estimating the liveness of the presented face.

Embodiments of the present invention provide a method for estimating the liveness of a face presented to a facial biometric system, i.e., determining whether it is a real face or a spoof. The disclosed method is implementable as an anti-spoofing algorithm, step, or module, in the facial biometric system. The system may be configured to enrol or register passengers, or verify passenger identities, or both. The disclosure also covers facial biometric systems which are configured to implement the method.

As will be described, embodiments of the liveness detection method disclosed herein take advantage of the reflective nature of the eyes, to detect whether or not the images presented to the system have been taken of a real human. It would be expected that, if a real person is present and interacting with the system, then an image acquired of at least the person's eyes, when the "flash" (either a camera flash or a screen displaying a bright shape) is on will have image data which indicates the presence of the flash in both of the "eyes" in the image data. As the eyes generally are reflective, turning on the flash is expected to cause the eyes to reflect the light, and the reflection is expected to be detectable as speckles in the image data. Thus, embodiments of the liveness detection will involve detection of sparkles.

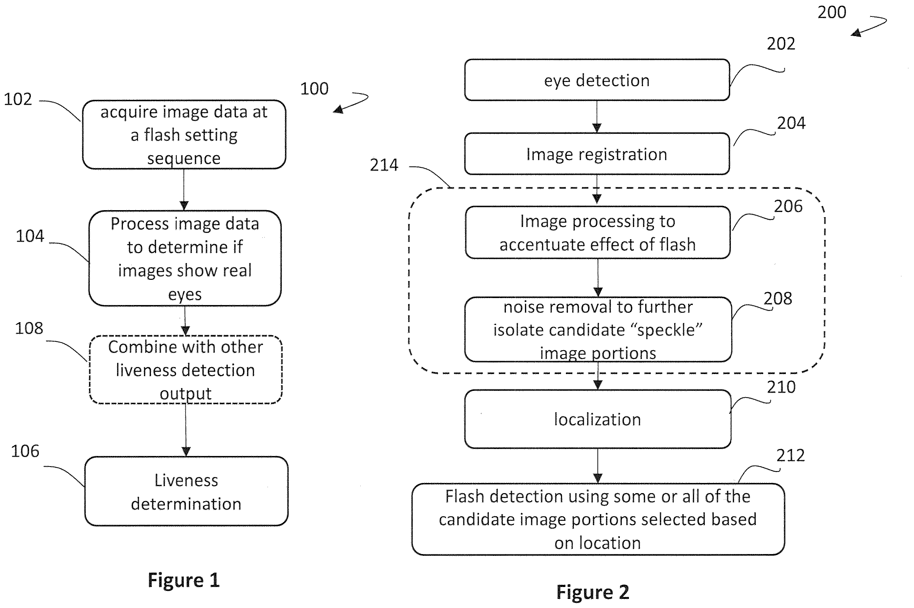

Figure 1 is a high-level flow chart depicting a liveness detection method 100 in accordance with an embodiment of the present disclosure. At step 102 the system acquires image data comprising a plurality of images showing both eyes of a user, at predefined flash settings.

The plurality of images may be, but are not necessarily, taken as a series in quick succession, e.g., in a burst. For example, the user may be allowed time to rest or blink, or may be given information or instructions between the acquisition of the separate images. Each image in the plurality is taken at a predefined flash setting. The flash settings may be binarized and comprise an on setting and an off setting. The flash settings may have multiple levels. For example, when a selfie camera is used, the screen flash is used to provide the flash. The brightness of the screen flash may be expressed as e.g., 0 to 255 for systems with an 8-bit brightness encoding for pixels. The flash settings for the plurality of images may be considered as a flash setting sequence.

At step 104 the acquired image data is processed to detect the user's eyes in the image data and to determine whether the images are acquired of real eyes. The output from the determination at step 104 may be used directly to output the final liveness determination result at step 106. Optionally, the output from the determination at step 104 may be combined with the result from one or more other liveness detection algorithm(s) at step 108, and the combination is used to provide the final liveness determination at step 106. The box representing the combination step 108 is shown in dashed line to denote the optional nature of this step. The image acquisition at step 102 and processing at step 104 may be an interactive process whereby the system will output instruction, to direct the passenger attempting to register or authenticate their identity to take particular actions.

The flash setting sequence may include a series of "on" (flash is on) or "ofT" (flash is off) settings. The minimum number of settings in the sequence is two. For a three-setting sequence, the sequence may be "off-on-off" or "on-off-on". Capturing images of the user when the flash setting is controlled to alternate between the "on" and "off' settings is expected to cause visible flickering in the eyes, detectable due to the reflective nature of the eyes. Therefore, processing can be apply to determine whether the image data show features which are expected in response to the change in the flash setting, i.e., the visible speckles of light or flicker reflecting the flash in only one or more of the images acquired, but not visible (or not visible to the same extent) in the others. In other implementations, there may be one or more flash settings between the two extremes of "on" and "off" settings, as long as the difference between the settings is still sufficient that the image data of the eye are expected to have discernible difference on the basis of the settings applied. The "flash" is not necessarily a camera flash. In embodiments where a selfie screen is used, the "selfie flash" would be provided by increasing the brightness of the screen, i.e., a screen flash. Therefore, the "flash" mentioned for these disclosures may be generalized to refer to an increase or step change in the brightness level which is output by the system and directed at the user when the image is taken. This will have the effect of illuminating the user's face at a higher brightness level. Furthermore, the screen flash may not necessarily involve a sudden increase in brightness of the entire screen. For example the algorithm may present a particular bright shape.

Figure 2 depicts one embodiment of the processing applied to a series of images to determine whether the image data from the series of images show the eyes of a real person. Each image in the series of images include the image data for the eyes. Thus the image may be a facial image showing the eyes, but may alternatively be a partial facial image showing the eyes. At step 202, image processing which is performed to detect the eyes may be required in order to identify the eyes or particular portions of the eyes (e.g., the cornea) in each image.

At step 204, the input series of images are spatially registered with each other, so as to establish a spatial correspondence between the images. This step is useful, particularly in embodiments which do not employ a deep learning approach to extract or classify the "speckles" form the image data. In embodiments utilizing a computer vision processing approach, the registration step 204 is performed to co-register the same features or landmarks (e.g., the iris, the lens of the eyes, etc) in the images. In performing the image registration, the reference image will be selected so as to minimise the expected movement of the eyes between the reference and target images. For example, in implementations where a sequence of three images are acquired for processing, the middle image may be selected as the reference and the first and third images are thus the target images. In embodiments which use a neural network approach, e.g., deep learning based on training data, step 204 may be omitted.

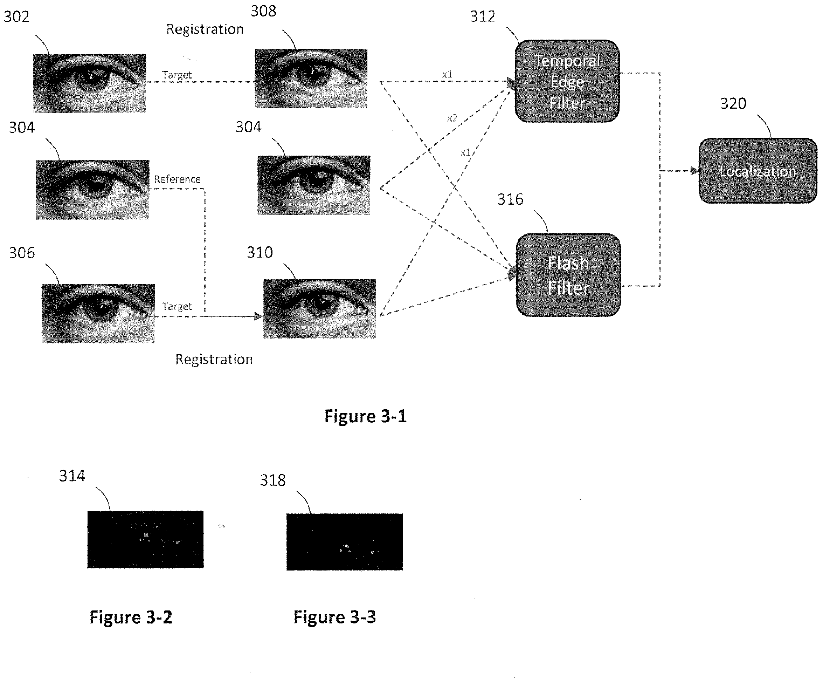

The reference image is expected to have been acquired at a flash setting which is different than the setting used for the acquisition of the target image(s). At step 206, the images are processed to accentuate the effect of the flash on the image data. This can be implemented using temporal processing. The temporal processing may comprise computing a difference image, although other types of temporal processing may be used, as can be determined by the skilled person. For example, higher order temporal processing may be contemplated. In one implementation, a temporal edge filter is applied to the images to enhance the middle image in comparison with the other images and/or attenuate the other images in comparison with the middle image. The filtering helps to enhance the difference between the image acquired when the flash is on and the image acquired when the flash is off, thus accentuating the effect of the flash on the image data. The resulting image from the temporal processing (e.g., see Fig. 3-1) is expected to show speckles caused by the flash. However, in practice the output image from the temporal processing may include noise that are not necessarily speckles caused by the flash.

Preferably, at step 208, the output image from the temporal processing is processed by the application of one or more further filters. This can help to remove or reduce the amount of noise in the output image, to better isolate the image portions in the temporal processing output image showing the speckles caused by the flash. For example, the output image from the temporal processing (e.g., see Fig. 3-1) is further processed to produce a binarized image (e.g., see Fig. 3-2). This may be achieved by applying a pixel brightness threshold at step 208, to retain only pixels having a brightness or intensity above a flash filter threshold. This may be considered to be the application of a flash filter at the flash filter threshold. In some embodiments the output of the flash filter may be binarized, where all pixels having a brightness value above the flash filter threshold is assigned a first value, and all pixel below the flash filter threshold is assigned a second value.

The further processing may include processing in order to extract speckles satisfying certain geometry-based constraint(s), such as shape, size, aspect ratio, etc. This processing may be considered to provide a contour filter. The speckle image portions may be determined by identifying image portions which have an expected shape or contour. For example, when the user is using a selfie camera to take the images, the speckles caused by the screen flash may be expected to have a particular shape corresponding to a shape of the screen flash, which in most cases will be a rectangular shape. Thus, shape processing or contour process may be performed on the candidate speckles to further filter them to remove possible noise. With sufficient camera resolution and processing speed, it is envisaged that the shape of the screen flash and therefore the speckle it causes may be variable. A high enough camera resolution may allow the details of the cornea to be captured, and in this case more complex shapes as projected by the screen flash may be utilised. This allows an additional way of adding a variability which a spoofing attempt would need to satisfy, making it harder to spoof the system.

The speckle image portions may be extracted by identifying only those speckle image portions that present bilaterally. That is, if a speckle image portion appears in one eye but a "matching" speckle image portion in a mirror location in the other eye cannot be found, then the speckle image portion will be eliminated, i.e., filtered out. In this case there is no matching speckles from the left and right eyes.

Speckles from the left and right eyes that are considered to be "matching", may be required to have symmetric locations. For example, the symmetric locations may mean the locations of the left and right eye speckles with respect to the respective inner eye corners, which mirror each other. In some embodiments, to be considered "matching", the speckle image portions may further need to have matching geometries, e.g., in terms of one or more of shape and size, aspect ratio, etc.

One or more of the above-mentioned processes may be included at step 208 to further isolate (i.e., extract) the speckle images portions. If multiple processes are used, the order in which they are applied may be altered as configurable by the skilled person. For example, the skilled person may opt to apply a processing order with the least overall processing burden.

At step 210 a localization determination may be performed to determine the locations of the speckles. The locations assigned to the candidate image portions may be the nearest mesh nodes in a mesh generated from the eye image data (or facial mesh data, depending on the implementation). The locations may be specific biometric landmarks. The locations may be defined using the coordinate system of the co-registered images in embodiments where the image registration step is performed.

At step 212, the identified speckle image portions are further filtered on the basis of their locations, to determine whether they are likely to be speckles resulting from the flash. This can help the overall algorithm to determine which of the speckles are likely to have appeared as a result of the flash being on and reflected by a real person's eyes ("flash detection"). For example, speckles which are detected but are located outside the reflective eye areas, may be a result of the user's skin being oily or the user wearing glasses, etc. By considering only those speckles which are located in the areas of the eye likely to reflect the flash under the control of the liveness detection system, the system can better deal with noise in the data. In embodiments, the user may be directed by the system to take a picture or selfie with his or her face is in a particular target area on the screen, such that the speckle is expected to be seen in the corneal regions of the eyes. In this case, the localization is further help to identify the speckles that are located in the corneal region. Thus the localization step 210 and location filter step 212 also helps to further filter out the noise and to identify the speckle image portions. In some implementations the localization and location-based filtering may be performed earlier in the process, e.g., before the step 206 or step 208, or both.

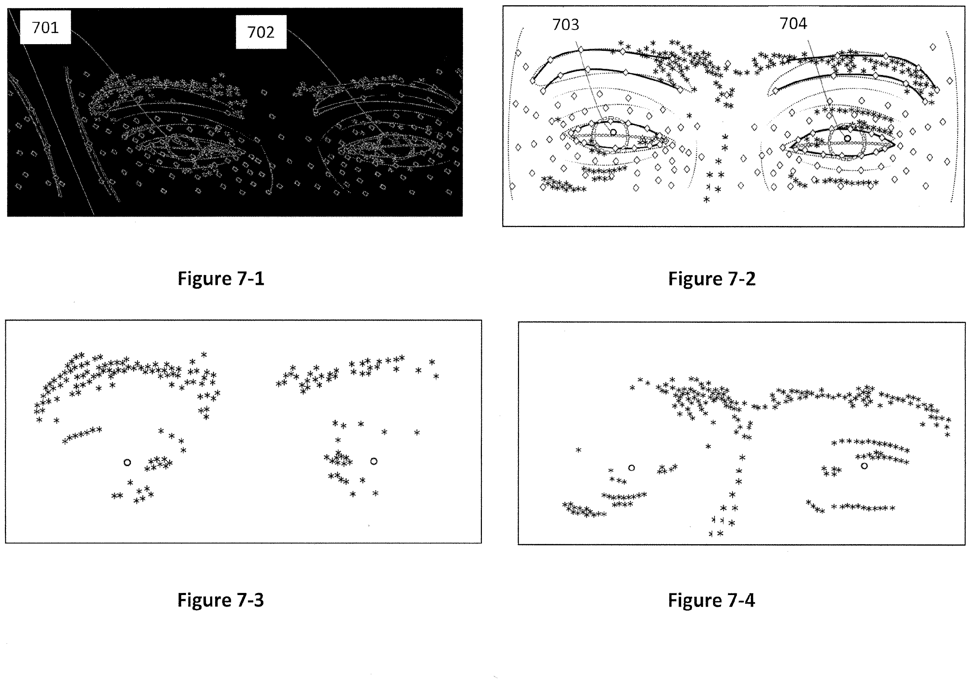

Figures 7-1 to 7-4 show examples where the extraction of the speckles is noisy, but improved by the location-based processing. Figures 7-1 to 7-2 respectively show two input images, each from a series of images. Figures 7-3 to 7-4 show the result of the output of the temporal processing performed on the input images, further filtered by a flash filter. As can be seen, Figures 7-3 to 7-4 show many "bright" areas but only one image portion in each eye is expected to the speckle. By identifying the image portion which is in the corneal region in each eye as represented by the circles 701, 702, 703, 704 in Figures 7-1 to 7-2, the number of image portions which may be extracted as "speckles" is significantly reduced.

It will be appreciated that the order of the processing may differ. For example, the localization (step 210) and location-based filtering (step 212) may be performed before some or all of the noise removal process(es) at step 208. Steps 206 and 208 together may be considered to be temporal flash processing, represented by box 214 shown in dashed lines.

The process 200 depicted may be further varied. For example, an initial image may be captured with the flash set to be "off', and processed to determine whether there are "speckles" in the eye area, particularly in the reflective areas of the eyes. This helps the system to ascertain effects of the current ambient lighting which may contribute to speckles that should not be considered, when assessing liveness. The initial image may be an image taken as a separate capture prior to the series of images are taken. Alternatively, the first image of the series of images, if acquired when the flash is off, may be used for the purpose of determining whether there are detectable speckles due to ambient lighting.

Figure 3-1 conceptually depicts an example of the processing performed on the input images for identifying possible speckles. The processing is performed on images 302, 304, 306, respectively being the first, second, and third images in a series of right eye images, where the order of the images reflects the order in which the images have been acquired. Although not shown, the same processing is also performed on the left eye images respectively corresponding to the depicted right eye images.

In this example, the images were taken with the flash on, off, and on, respectively. The middle image, i.e., the second, image 304, is used as a reference image, and the other two images 302, 306 are taken as target images which are co-registered with the reference image. The reference image 304, and the resulting co-registered images 308, 310, are provided as input to a temporal edge filter 312. Because a different flash setting is used for the reference image 304, it is expected that its image data will be different from the data from the two other images. The temporal edge filter, in this example, is configured to enhance the difference between the middle image 304 and the co-registered images 308, 310, by applying a higher weighting (2x) to the middle image compared with the weighting (1x) applied to the co-registered images 308, 310. It will be appreciated the exact weightings applied are not limiting factors. The output of the temporal difference image is shown in Figure 3-2, using the three input images.

A threshold filter ("flash filter") 316 is applied to the resulting different image 314, to further filter the difference image 314 so that only those image portions of a brightness above the threshold level of the flash filter 316 will remain. This helps to isolate the possible speckles, as shown in the result image 318 from the threshold filter, shown in Figure 3-3. A localization algorithm 320 is applied to the output from the temporal filter 312 and flash filter 316 to determine the location of the possible speckles. There are a number of ways the locations of the possible speckles may be expressed. The locations may be determined on the basis of the x, y coordinates of the possible speckles. The determined locations may be expressed as landmarks associated with the eye, or as mesh nodes in a mesh to represent the eye.

More generally, Figure 3 depicts a process where the input images are co-registered, and passed through a temporal flash filter, and then speckle image portions are identified from the output of the temporal flash filter that are located in a particular region, e.g., corneal region, of the eyes.

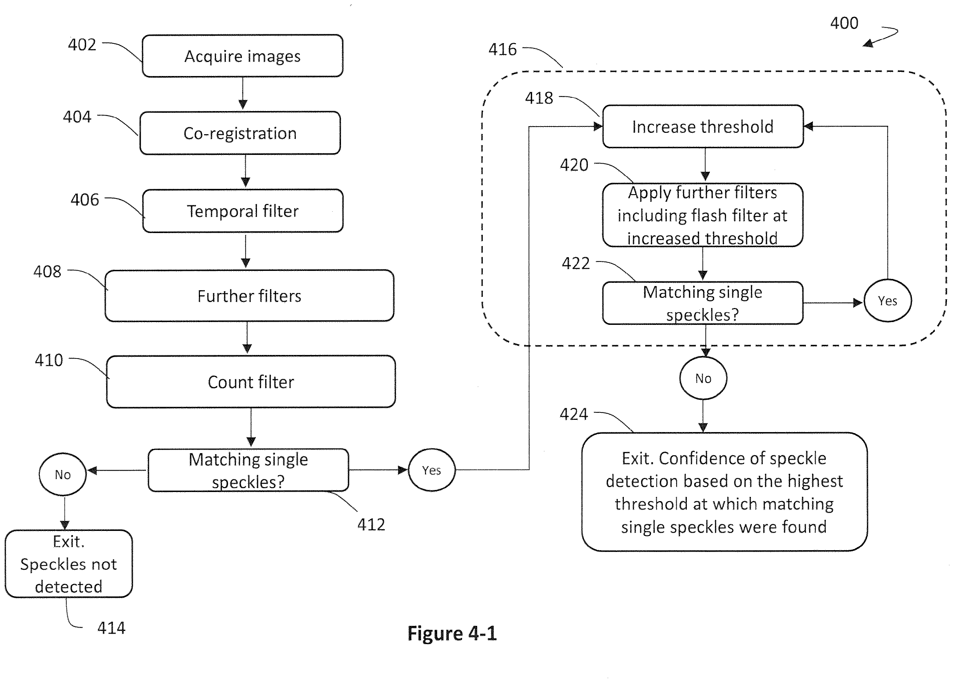

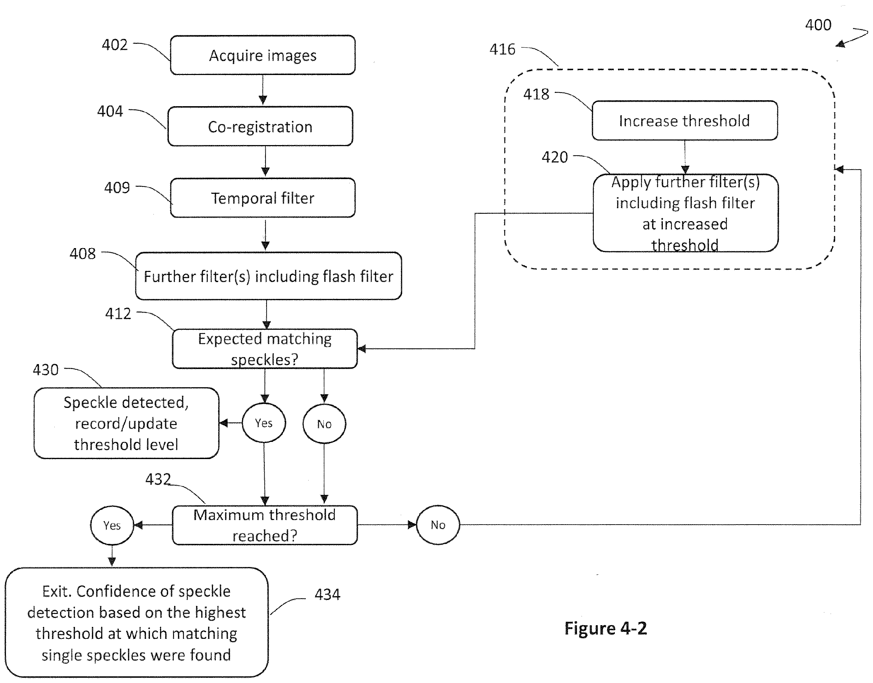

Figure 4 depicts a liveness detection process 400 utilising the temporal flash filter, in accordance with embodiments of the present disclosure. In this example, the temporal flash filter is iteratively applied until the algorithm exits the iterative processing. The flash threshold at which the exit occurs is indicative of a confidence level associated with a determination that speckles caused by the forced flash is detected, indicating real human presence.

At step 402, input images are acquired, similar to the acquisition of the image sequence at step 102 described above. Depending on the original image input, further processing to identify the eye or the corneal region may be performed, e.g., using segmentation or classification techniques. At step 404, the images are co-registered, for example in accordance with the co-registration described above in relation to Figure 3-1. In embodiments utilising artificial intelligence techniques, such as to provide object identifiers or object classifiers, the co-registration step may not necessarily be required. At step 406, temporal filtering is applied to emphasize the effect of the forced flash. The temporal filtering output is passed to step 408 for further filtering in order to detect speckles caused by the flash. Step 408 may include one or more of the filters discussed above in relation to step 208. At step 410, the "count filter" is applied, which involves, rejecting the speckles found thus far, if the number of speckles found is not as expected. For example, in processes where only one speckle in each eye is expected, the effect of including the count filter in the process 400, is that while the processed image still has two or more speckles, one or more applications of flash filters, with increasing flash filter thresholds, will be applied, until a single speckle is left in each processed image. This allows the determination of whether there are matching speckles in the processed images for the left and right eyes at step 412. If no matching speckles are found, the system exits the process 400 and the algorithm determines no speckles caused by the flash have been detected (step 414).

If it is determined that matching speckles from the left and right eyes are found, the processing proceeds to determine a confidence measure in relation to this determination by applying the processing in box 416. At step 418, the highest threshold which has been applied so far in the process 400 is increased. The amount of increase may be set by the algorithm designer as required. At step 420 the filter is applied again to relevant image data which in this case is the temporal processing output, but with the increased threshold. At step 422 the algorithm determines whether there are matching single speckles from the left and right eyes. If there are, steps 418 to 422 are reiterated. When it is determined step 422 that there are no matching single speckles from the left and right eyes, the system determines the confidence measure and exits the process (step 424). The confidence measure will be determined based on the highest threshold which was applied at which matching speckles from the left and right eyes were found.

It is expected that in some scenarios, the matching speckles will only be found when the filter threshold used is high enough so as to eliminate enough noise. Therefore, the system may be configured to only exit the process 400 if no matching speckles have been found at any of the filter thresholds. For example, Figure 4-2 depicts a variation for the process 400. In this embodiment, the process includes steps 402 to 408 as mentioned above. After the applications of the further filters at step 408, the system determines whether the number of speckle(s) detected in each eye is the expected number (step 412 above).

From step 412, if the expected number of speckle(s) is or are found in each eye, the system determines that speckles have been found and records the last applied flash filter threshold (step 430). Thereafter, the system determines whether last applied flash filter threshold has reached a predetermined maximum (step 432). If the expected number of speckle(s) is or are not found in each eye, the system proceeds directly to step 432. If the last applied flash filter threshold has reached the maximum value, the system exits the process 400 and the confidence measure associated with the detection is determined on the basis of the recorded threshold, if any (step 434). If the last applied flash filter threshold is still lower than the predetermined maximum, the system iterates through steps 418 to 420 mentioned above. This involves increasing the flash filter threshold which is applied to the temporal processing result (step 418), applying the one or more further filter(s) including the flash filter at the increased threshold (step 420). The system then determines again whether an expected number of speckle(s) is or are found in each eye (step 412), and in the positive updates the threshold at which the speckle is detected (step 430).

The exact algorithm to implement the above may vary. For example, the specific program may vary in terms of how to integrate the temporal flash processing algorithm as a modular block into the processing loops, or how to integrate exit conditions into the processing loops. The algorithm may also vary based on the shape of the screen flash presented (if applicable in the embodiments), or more generally, the variability in the sequence of events that was presented to the user. In the general sense, the brightness threshold or the contour extraction can be applied to extract from the image sequence the information (e.g., timing of "flash" events or particular shapes) which would expected to be extracted when a real face is presented.

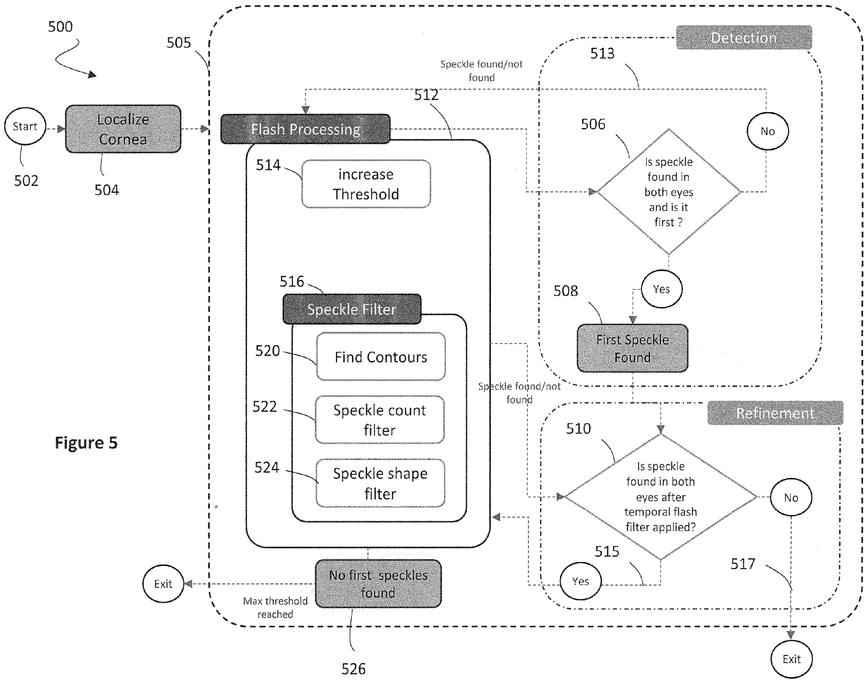

One example is shown in Figure 5. In this example, single matching speckles are expected to be caused the flash. It will be appreciated that specific arrangement here is provided by way of example, and is not intended to limit the scope of the disclosure. The "start" 502 shown in Figure 5 can be considered to represent an initiation of the process in respect of the input facial images of a user (e.g., passenger). This may include the co-registration of the input set of images and an initial pass of the temporal flash processing on the co-registered images. The co-registered images are passed to step 504, to locate the cornea in the images, before the iterative flash processing 505 is applied. This can help to reduce processing load by ignoring results not in the corneal region. There may be variations. For example, the start 502 may only involve the image co-registration, and the step to localize the cornea is performed on the co-registered images. In this case, the initial pass of the temporal flash processing will also include the application of the temporal filter.

The iterative processing 505 starts with a detection phase of the processing. In the detection phase, at step 506 the system determines whether there are matching single speckles in both eyes. It may perform an initial pass of the flash processing (block 512) in order to reach this determination. For the initial pass, the flash filter threshold will be set to a predetermined minimum threshold. If the matching speckles are found, the matching speckles will be the "first speckles". Box 508 represents the stage of the process 500 where the "first speckles" are declared to have been found. If first speckles are not identified, one or more further call(s) to the temporal flash processing 512 is made (path 513) with the flash filter threshold increased in each call, until the first speckles are detected. If the first speckles are never detected and the flash filter threshold has reached a predetermined maximum value, the system makes the determination that no "first speckles" can be found (box 526) and the process exits. The result determination is therefore that no speckles caused by the flash could be find at any of the minimum to maximum applied flash thresholds, and thus liveness is not detected.

If first speckles have been identified (box 508), the system enters a "refinement" phase in order to further determine a confidence level associated with the speckle detection. In the refinement phase, at step 510 the system determines whether speckles have been found after the most recent iteration of flash filter processing. In the positive, the system makes a call to the flash processing module 512 (path 515) with an increased flash filter threshold, and then checks the result again (step 510) to see speckles have been found at the increased flash filter threshold. When the system first enters the refinement phase from the detection stage, the output from the determination at step 510 will be a positive determination. If matching speckles are still detected in both eyes after a pass of the flash processing 512 in the refinement phase (i.e., result from the determination at step 510 is "yes"), the flash processing is reiterated by calling the flash processing module 512 again (path 515) . If matching speckles are no longer found after a particular pass of the flash processing 512, the system exits the process 500 (path 517).

At the exit from the refinement phase of the process 500, the system will determine a confidence measure based on the most recently used parameters of the flash filter used at which matching speckle extraction was possible. If the exit occurred from the detection phase, this means matching speckles were never extracted from the processing block 505, then the process 500 determines that no speckles as caused by the forced flash has been detected.

Therefore, in the above, the subsequent flash processing 512 performed whilst the processing 500 is in the refinement stage is configured to determine a "strength" of the extracted speckles. The "strength" may be defined in terms of the brightness of the speckle. However, this may instead be defined in terms of the contrast between the speckle and its neighbour pixels. The threshold will be set accordingly, e.g., to be applied to the absolute brightness in the temporal edge filter output, or to be applied to the contrast between the speckle(s) in the temporal edge output and the surrounding pixels. In another example the contrast may be the brightness difference, between image pixels of the same corneal location(s) where a speckle is found, taken at different time points and at different flash settings. This may be considered a "temporal brightness difference" associated with the particular speckle.

In the above, the flash processing module 512 is configured to increase the flash filter threshold (step 514). Thus, each time the flash processing 512 is run, the flash filter threshold will be increased from the most recently applied threshold. The flash processing module 512 further includes a speckle filter processing block 516, configured to apply one or more of the filters discussed above in relation to Figure 2, including the flash filter which will be applied at the updated flash filter threshold. In the current example speckle filter processing block 516 includes the identification of a shape (or contour) of the image portion(s) that remain from the flash filtering, and an analysis of the shape (or contour). It may also include the analysis of the locations of the speckles and further determine whether the speckle in the left eye and the speckle in the right eye "match" each other.

In embodiments where the user is interacting with a screen, the strength of the "flash" which is applied may also depend on the brightness of the user's screen, which may be set to a high or low brightness, or an automatically adjusted brightness level, depending on their preference. The brightness difference helps to extract the flash information even in low screen brightness setting.

Additionally, ambient light setting could also impact the strength of the flash. As the user is required to fit the face with restricted yaw, pose and roll, the camera (typically the selfie screen from a mobile device) needs to be held roughly in front of the centre of the face, which results in flicker occurring in both the corneas. The flicker shows up as a speckle in the image data of the eye. In embodiments as described herein, the confidence measure is determined on the basis of the maximum flash threshold used to extract two matching speckles, one from each of the left and right eyes. As the extraction process takes into account factors such as the geometries and locations of the speckles, the confidence measure can be considered to provide a measure of the brightness, clarity, and shape of the flickers in both of the corneas.

Further robustness may be added to a liveness detection system utilising the speckle extraction-based processing described above. For example, randomization may be introduced into the capture pipeline to help preventing an attacker to prepare a recorded routine to fool the capture process. The randomization may incorporate a face position randomizer would require the user to place his/her face at random position each time, making it harder for an attacker to prepare a face positioning routine. The randomization may incorporate a flash display randomizer, in which the timing of the flash sequence is randomized, making it harder for the attacker to create a flicker routine on the face. The flash display randomizer may further randomize a shape or contour of the screen flash, if using hardware capable of acquiring the image data in high enough resolution to process the data.

Further robustness may also be added by incorporating one or more other liveness detection methodologies, such as those disclosed in PCT/AU2024/050111, the contents of which are incorporated herein by reference. For example, the liveness detection involving speckle extraction as disclosed herein, is considered to be robust against two-dimensional static or dynamic spoofing, as well as three-dimensional static spoofing. The smile detection disclosed in the aforementioned application is considered to be robust against static two dimensional or three-dimensional spoofing. The combination of both liveness detection methods in the liveness detection system will therefore be useful against static two-dimensional and three-dimensional spoofs, as well as dynamic two-dimensional spoofs.

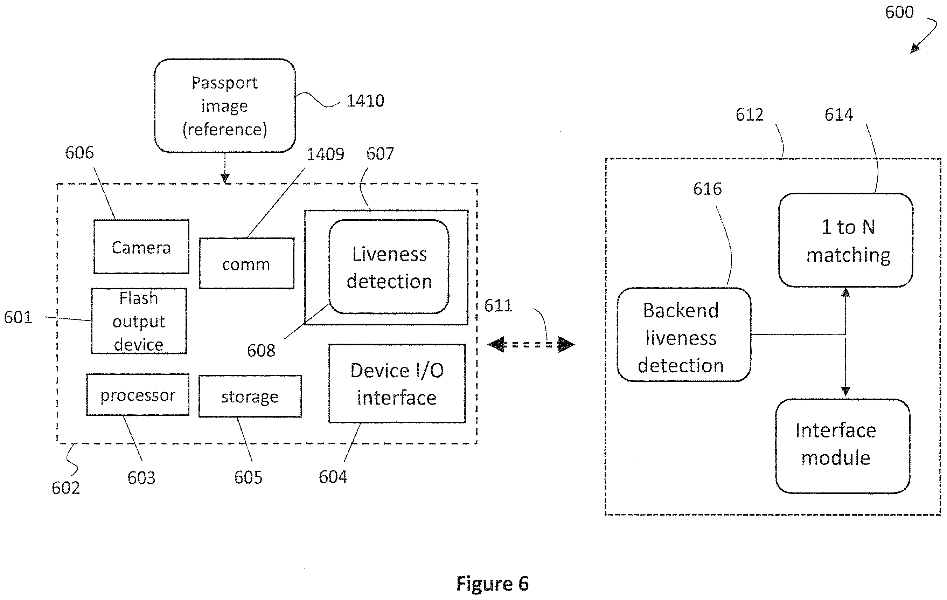

Figure 6 schematically depicts an example of an automated system 600 for the purpose of authenticating a traveller or registering a traveller. The system 600 includes a device 602 which includes a camera 606 which is configured to acquire input image data, and a flash output device 601, so that the device 602 can acquire the images under the specific flash sequence as described herein. Alternatively the device 602 is configured to receive the feed or images from an external camera configured to acquire images with the flash sequence. The device 602 includes a processor 603, which may be a central processing unit or another processor, configured to execute machine instructions to provide the liveness detection method in accordance with the present disclosure, either in full or in part. For example the processor 603 can be configured to only execute the method in part, if a backend system with more powerful processing is required to process any of the steps of the method. The machine instructions may be stored in a memory device 607 collocated with the processor 603 as shown, or they may be partially or wholly residing in one or more remote memory locations accessible by the processor 603. The processor 603 may also have access to data storage 605 adapted to contain the data to be processed, and possibly to at least temporarily store results from the processing.

The device 602 further includes an interface arrangement 604 configured to provide audio and/or video interfacing capabilities to interact with the user. The interface arrangement 604 includes the display screen and may further include other components such as a speaker, microphone, etc. There may also be a communication module 609 so that the device 602 may receive or access data wirelessly, or communicate data or results to a remote location, e.g., a computer at a separate server, a computer at a monitoring station or cloud storage, over a communication network enabling wireless communication 611.

In use, the input image data are processed by a liveness detector 608 configured to implement the liveness detection method. As mentioned above, the liveness detector 608 is provided as a computer program or module(s), which may be part of an application executed by the processor 603 of the device 602. Alternatively the liveness estimator 608 is supported by a remote server or is a cloud-based application, and accessible via a web-based application in a browser.

In Figure 6, the box denoting the device 602 is represented in dashed lines to conceptually signifies that the components therein may be provided in the same physical device or housing, or one or more the components may instead be located separately. For example, in embodiments where the device 602 is a programmable personal device such as a mobile phone or tablet, the mobile phone or tablet can provide a single hardware equipment containing the input/output (I/O) interface arrangement 604, processor 603, data storage 605, communications module 609, camera hardware 606, local memory 607. The machine instructions for the liveness detection can be stored locally or accessed from the cloud or a remote location, as mentioned previously.

The application program for performing the liveness detection may be provided as an application executed by the processor of the local device, e.g., a mobile application installed and running on a mobile phone. Alternatively, the application program may be provided to the local device as a web application via a general web browser application (such as Chrome, Edge, Safari or the like) that is installed thereon.

Particularly in the travel context, the automated system 600 may be a kiosk such as an airport check-in kiosk.

In some embodiments, the device 602 is a "local device" as it is in a wireless connection with a backend system 612. Such local devices may be provided by mobile phones or tablets. In the depicted embodiment the backend system 612 is a remote server or server system where the 1:N biometric matching engine 614 resides. Communication between the device 602 and the backend system 612 is represented by dashed double arrow 611, and may be over a wireless network such as but not limited to a 3G, 4G, or 5G data network, or over a WiFi network. However the backend system 512 may instead be provided by another server or server system, such as an airport server separate to but in communication with the server performing the 1 :N matching.

In these embodiments, the backend system 612 may include a backend liveness detector 616 configured to implement the same method as that implemented by the liveness detector 608, either partially or in full. In this case the camera feed data are also sent to the backend liveness detector 616. That is, while the liveness detector 608 in the device is processing the live camera feed, the camera data is also being fed to the backend server 612 for the same processing. This serves the purpose of performing a verification run of the processing to ensure there is no corruption in the result(s) returned by the liveness detection, or for the purpose of performing step(s) in the liveness detection method which might be too computationally intensive for the local device 602 to handle, or both. The automated process of authenticating or enrolling the traveller will only proceed, for 1:N matching to occur, if both the results from the local liveness detector 608 and the backend liveness detector 616 both indicate "liveness " of the facial image in the camera feed.

Further robustness of the overall system may be improved by applying video-fingerprinting or encryption to reduce the likelihood of a video injection attack. Video injection attacks can be done through a virtual camera replaying a pre-recorded video which attempts to spoof the liveness checks. Over time the same video can repeatedly be injected and eventually could get lucky and closely match the randomness in the capture process. Video fingerprinting may be applied to the image sequence captured during a liveness test, to prevent an attacker from attempting to replay the same video more than once. For example, when an input sequence is provided to the local device 602, the sequence or the output data from the liveness detection module may be fingerprinted. If the same video is replayed at a later time, the application would recongnise the fingerprinting and realise the video may be injected in an injection attack, and prevent the transaction to the backend 612 from proceeding. The video fingerprinting may be done by, for example, creating a rolling hash function, associated with the real time video, stored locally in the device 602.

It is possible that an attacker can bypass the front end capture system, e.g., the mobile device 602 and insert sequence of data to the backend 612 to get successfully authenticated. Therefore, securing biometric data cryptographically, while in transmission, is specifically useful against injection attacks. In some embodiments, alternatively or additionally to the video fingerprinting, the biometrics data transmission between the mobile device 602 and the backend 612 may be secured by encryption techniques. The backend 612 may also be a security server. For example, the data from the liveness module provided for performing the liveness detection at the local device 602 may be encrypted using a public key which is stored locally but require a private key at the backend server for decryption. The encrypted data is transmitted to the backend server 612, where it will be validated. A message regarding whether the validation is successful is returned to the local device 602. This confirmation may be required for the liveness detection process to proceed.

In the travel context, the liveness detection is described as part of a check before biometric identification is performed. However, the implementation of biometric identification does not affect the working of the liveness detection and thus is not considered a part of the invention in any of the aspects disclosed. For instance, liveness detection may be implemented in systems which do not perform biometric identification. For example, it may be implemented in systems to check whether anyone passing through or at a check point is using a spoofing device to conceal his or her identity or to pose as someone else, e.g., to join a video conference or to register themselves onto a particular user database, using a "spoof.

Variations and modifications may be made to the parts previously described without departing from the spirit or ambit of the disclosure.

For example, other processes which provides the function of detecting the relevant eye area, and detecting the presence of speckles caused by the applied flash, may be utilised. As alluded above a trained model may be used to make the determination of whether speckles caused by the applied flash are found. A mixture of approaches may be employed. For example, the identification of the eye or cornea could be performed using a classifier, and the presence of the speckles caused by the applied flash could be determined using temporal processing on bounding boxes identified by the classifier.

As another example, there may be scenarios in which the flash, rather than presenting as a single flash shape each time the flash is turned on, comprise a flash pattern having one or more flash portions, so that each of the flash portion or flash portions is "flashed" when the flash is turned on. The shape of each flash portion may also be adjustable. Therefore, in embodiments of the present disclosure, the "flash" may be comprised of one or more flash portions. The single speckles detected in the left and right eyes which are forced by such a flash, would therefore be comprised of one or more speckle portions corresponding to the one or more flash portions in the flash. This can help to add more randomisation into the algorithm, particularly in implementations where the image capturing hardware can provide the required resolution.

The present specification describes various embodiments with reference to numerous specific details that may vary from implementation to implementation. No limitation, element, property, feature, advantage or attribute that is not expressly recited in a claim should be considered as a required or essential feature. Accordingly, the specification and drawings are to be regarded in an illustrative rather than a restrictive sense.In the claims which follow and in the preceding description, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the disclosure.

## Claims

1. A liveness detection method for determining whether a presented face in respect of a user is a real face, comprising:
obtaining an image sequence comprising a plurality of images, each image comprising left eye image data and right eye image data, each image in the image sequence being acquired of the presented face under a respective flash setting from a flash setting sequence, the flash settings in the flash setting sequence including at least two different flash setting values;
processing the image sequence to detect speckles in the right eye image data and the left eye image data from the image sequence, which are caused by the eyes reflecting a flash applied under a said flash setting when acquiring at least one image in the sequence, the flash setting for the at least one image being brighter than the flash setting for a preceding and/or a succeeding image;
determining whether a left eye speckle is detected from the left eye image data can be matched to a right eye speckle detected from the right eye image data, or vice versa; and
outputting a liveness detection result based at least partially on the determination.

2. The method of claim 1, the processing comprising applying a filter to enhance speckle image data corresponding to the speckles in the image sequence relative to non-speckle image data in the image sequence, and/or to suppress the non-speckle image data relative to the speckle image data.

3. The method of claim 1 or claim 2, wherein detecting the speckles comprises applying a temporal algorithm to enhance a difference between the at least one image and the preceding and/or succeeding image, wherein an output image of the temporal algorithm is processed to identify image portions therein which are speckles.

4. The method of claim 3, wherein the identified speckles are required to have a minimum brightness level.

5. The method of claim 3 or claim 4, wherein the filter to enhance speckle image data relative to the non-speckle image data and/or to suppress the non-speckle image data relative to the speckle image data comprises a brightness filter applied to the output image from the temporal algorithm or a part thereof, to apply a brightness threshold.

6. The method of claim 5, wherein the brightness threshold is selected so that there is only one speckle for each eye.

7. The method of any preceding claim, wherein the detection of speckles comprises applying a location analysis, wherein the detected speckles are required to be located within the user's corneas in the image sequence.

8. The method of any preceding claim, wherein the flash or flashes applied in accordance with the flash sequence has or have a predetermined shape and/or dimension, or a configurable shape and/or dimension.

9. The method of claim 8, wherein the flash or flashes applied in accordance with the flash sequence has or have one or more flash portions.

10. The method of any preceding claim, wherein the detection of speckles comprises applying a geometry analysis, wherein the detected speckles are required to satisfy one or more geometrical constraints, the geometrical constraints comprising constraints based on one or more of shape, aspect ratio, and contour.

11. The method of any preceding claim, wherein determining whether the left speckle and the right speckle match with each other comprises determining whether a location of the left speckle and a location of the right speckle mirror each other.

12. The method of claim 1, wherein determining whether the left speckle and the right speckle match with each other further comprises determining whether the left and right speckles have matching geometries.

13. The method of any preceding claim, further comprising, if it is determined that the left and right eye speckles are detected from the image sequence and the detected left and right eye speckles match each other, calculating a confidence measure associated with the determination.

14. The method of claim 13, wherein calculating the confidence measure comprises:
iterating the processing of the image sequence to detect the speckles one or more times, wherein at each iteration a threshold applied in the filter is increased;
stopping the iterations when it is no longer possible to detect one left eye speckle in the left eye image data and one right eye speckle in the right eye image data;
determining the confidence measure based on the threshold applied during the last iteration of the processing of the image sequence to detect the speckles where it was possible to detect one left eye speckle in the left eye image data and one right eye speckle in the right eye image data.

15. An apparatus configured to determine whether a presented face in respect of a user is a real face, comprising a processor configured to execute machine instructions which implement the method of any preceding claim.

16. A method of biometrically determining a subject's identity, including
determining whether a presented face of the subject is a real face, in accordance with the method of any one of claims 1 to 14;
providing a two-dimensional image acquired of the presented face for biometric identification of the subject, if it is determined that the presented face is a real face; and
outputting a result of the biometric identification.
